# EUROPÄISCHE PATENTSCHRIFT

(11) **EP 2 230 217 B1**
(45) Veröffentlichungstag und Bekanntmachung des Hinweises auf die Patenterteilung: **06.08.2014**
(21) Anmeldenummer: 10000655.0
(22) Anmeldetag: 22.01.2010
(51) Int. Cl.: C03B 9/353, C03B 9/38

(54) **Vorformstation einer IS-Glasmaschine**
Preforming station of an IS glass machine
Station d'ébauche d'une machine IS

(30) Priorität: 20.03.2009 DE 102009014168
(43) Veröffentlichungstag der Anmeldung: 22.09.2010
(73) Patentinhaber: GPS GLASPRODUKTIONS-SERVICE GMBH, 45329 Essen (DE)
(72) Erfinder: Diekämper, Lars, 45721 Haltern am See (DE)
(74) Vertreter: Lelgemann, Karl-Heinz

(56) Entgegenhaltungen:
- EP-A1- 0 576 745
- EP-A2- 1 149 806
- EP-A2- 1 473 281
- WO-A1-97/39989
- GB-A- 2 347 421

## Beschreibung

Die Erfindung bezieht sich auf eine Vorformstation einer IS-Glasmaschine nach dem Oberbegriff des Patentanspruchs 1.

Bei derartigen Vorformstationen wird durch die Parallelführung der Vorformhalterarme sichergestellt, dass sämtliche mittels der beiden Vorformhalterarme bzw. der daran gehalterten Vorformhälften ausgebildete Vorformen gleichzeitig und simultan geschlossen bzw. geöffnet werden.

Aus der GB 2 347 421 A ist eine Vorformstation einer IS-Glasmaschine bekannt, bei der die Vorformhalterarme zum Öffnen und Schließen der Vorformen parallel zueinander voneinander weg bzw. zueinander hin bewegt werden. Die Abstände zwischen den von den jeweiligen Vorformhalterarmen gehalterten Vorformhälften sind hierbei jeweils gleich. Zu der aus der GB 2 347 421 A bekannten IS-Glasmaschine gehört ein Stationskasten, der von einer Kühlvorrichtung der IS-Glasmaschine mit Kühlluft versorgbar ist. Die von den Vorformhalterarmen gehalterten Vorformhälften sind einander paarweise zugeordnet und mittels der Aufeinanderzu- bzw. Voneinanderwegbewegung der parallel geführten Vorformhalterarme simultan in ihre Schließ- bzw. in ihre Öffnungsstellung bewegbar. Die beiden Vorformhalterarme bzw. oberhalb derselben angeordnete und mit ihnen bewegliche Bauteile sind mittels jeweils einer Teleskoprohranordnung, wobei zu jeder Teleskoprohranordnung zwei Teleskoprohre gehören, an ein Gehäuse angeschlossen, das oberhalb des Stationskastens angeordnet ist und durch das sich zwei Kühlluftkanäle erstrecken, die mit einem Ende an die Teleskoprohre und mit dem anderen Ende an den Stationskasten angeschlossen sind. Jeder Vorformhalterarm ist sowohl während der parallel geführten Aufeinanderzubewegung als auch während der parallel geführten Voneinanderwegbewegung als auch in Schließstellung als auch in Öffnungsstellung mit Kühlluft versorgbar.

Die EP 1 149 806 A2 betrifft die Kühlvorrichtung einer Vorformstation einer IS-Glasmaschine, bei der die Voneinanderweg- und Aufeinanderzubewegung der Vorformhalterarme durch eine Schwenkbewegung realisiert wird. Darüber hinaus sind bei der in der EP 1 149 806 A2 gezeigten Vorformstation je Vorformhalterarm zwei Vorformhälften vorgesehen. Der Vorformhalterarm ist mittels eines einzigen Teleskoprohrs an die vorgeschaltete Kühleinrichtung der Vorformstation angeschlossen. Durch dieses Teleskoprohr werden beide an dem Vorformhalterarm gehalterten Vorformhälften mit Kühlluft versorgt. Das auf der Seite dieses Vorformhalters des Weiteren vorgesehene zweiteilige Kanalrohr ist nicht an den Vorformhalterarm angeschlossen. Dieses zweite Kanalrohr dient ausschließlich dazu, Mündungskühldüsen, die auf Mündungsformen der Vorformstation gerichtet sind, mit Kühlluft zu versorgen.

Auch die EP 1 473 281 A2 zeigt eine Vorformstation einer IS-Glasmaschine, bei der die Voneinanderweg- und Aufeinanderzubewegung der Vorformhalterarme durch eine Schwenkbewegung realisiert wird. Außerdem handelt es sich bei den Anschlusselementen, mittels denen die Vorformhalterarme an eine nachgeordnete Kühlluftversorgung angeschlossen sind, um flexible Luftversorgungsschläuche.

Ausgehend von dem vorstehend geschilderten Stand der Technik liegt der Erfindung die Aufgabe zugrunde, die gattungsgemäße Vorformstation einer IS-Glasmaschine derart weiterzubilden, dass die Qualität der in den Vorformen der Vorformstation hergestellten Zwischenprodukte bzw. Rohlinge gleichmäßiger und höher ist und dass des Weiteren die Kühlung der Vorformen bzw. der Vorformhälften im Vergleich zum Stand der Technik erheblich verbessert werden kann.

Diese Aufgabe wird erfindungsgemäß dadurch gelöst, dass zu jeder Teleskoprohranordnung eine der Anzahl der vom Vorformhalterarm gehalterten Vorformhälften entsprechende Anzahl Teleskoprohre gehört, die andererseits - d.h. mit ihren den Vorformhalterarmen entfernten Enden - am Stationskasten der Vorformstation angelenkt sind und von denen jeweils ein Teleskoprohr jeweils einer Vorformhälfte zugeordnet ist, und dass jedem Teleskoprohr der Teleskoprohranordnung stationskastenseitig ein Luftregelventil zugeordnet ist, das mittels eines Steuerglieds separat regelbar ist.

Durch die vorstehend angegebenen Merkmale im kennzeichnenden Teil des Patentanspruchs 1 wird nicht nur über den gesamten Herstellungszyklus von 360 Grad eine Kühlung der Vorformhälften ermöglicht, sondern gegebenenfalls beschädigte oder abgenutzte Einzelteile, insbesondere Kühlrohre der Teleskoprohranordnung, können auch schnell ausgewechselt werden. Es ist sichergestellt, dass bei Ausfall eines Teleskoprohres nur die diesem Teleskoprohr zugeordnete Vorformhälfte beschädigt werden kann. Die anderen Teleskoprohren zugeordneten Vorformhälften werden in jedem Fall weiter gekühlt. Des Weiteren kann durch diese Maßnahmen die Kühlung jeder Vorformhälfte separat ein- bzw. ausgeschaltet werden. An jeder Vorformhälfte kann eine kontrollierte Temperatur eingehalten werden. Hierdurch ergibt sich eine im Vergleich zum Stand der Technik erheblich bessere Prozeßüberwachung. Durch die separate und gesteuerte bzw. geregelte Kühlung jeder Vorformhälfte lässt sich die Lebenserwartung der Vorformhälften verlängern. Die mittels der erfindungsgemäß ausgestalteten Vorformstation erzeugten Glasrohlinge bzw. Zwischenprodukte haben eine im Vergleich zum Stand der Technik verbesserte Qualität, da jede Vorformhälfte in für sie optimaler Weise mit Kühlluft beaufschlagbar ist.

Für die konstruktiv-technische Ausgestaltung der Kühlung können bekannte pneumatische Komponenten eingesetzt werden.

Zweckmäßigerweise lassen sich die Luftregelventile als Proportionalventile ausgestalten.

Um sicherzustellen, dass unterschiedliche Teleskoprohranordnungen an unterschiedliche Stationskästen angeschlossen werden können, wird vorgeschlagen, dass die Teleskoprohranordnung über einen vom Stationskasten separaten Stationskasteneinsatz mit dem Stationskasten verbunden wird. Hierbei kann der Stationskasteneinsatz so gewählt werden, dass er - in Strömungsrichtung der Kühlluft gesehen - ausgangsseitig an die Teleskoprohranordnung und eingangsseitig an den Stationskasten angepasst ist, wobei eine entsprechende Anzahl Anschlüsse an der Eingangsseite und an der Ausgangsseite vorgesehen werden kann.

Entsprechend ist es zweckmäßig, wenn die Teleskoprohranordnung über einen vom Vorformhalterarm separaten Vorformhalterarmeinsatz an den Vorformhalterarm angeschlossen ist. Hierbei kann der Vorformhalterarmeinsatz je nach Anforderungsprofil so ausgestaltet werden, dass unterschiedliche Teleskoprohranordnungen an unterschiedliche Vorformhalterarme angepasst werden können. Hierzu werden am Vorformhalterarmeinsatz eine entsprechende Anzahl Anschlüsse an seiner Eingangsseite und an seiner Ausgangsseite vorgesehen, wobei diese Anzahl an die Anzahl der Teleskoprohre bzw. an die Anzahl der Vorformhälften angepasst werden kann.

Wenn der Vorformhalterarmeinsatz eine der Anzahl der vom Vorformhalterarm gehalterten Vorformhälften entsprechende Anzahl Kühlluftdurchgänge aufweist, kann jeder Vorformhälfte ein bestimmtes Teleskoprohr zugeordnet werden, so dass diese Vorformhälfte hinsichtlich ihrer Kühlluftversorgung völlig unabhängig von der der anderen Vorformhälften ist.

Entsprechend kann der Stationskasteneinsatz eine der Anzahl der Teleskoprohre der Teleskoprohranordnung entsprechende Anzahl Kühlluftdurchgänge aufweisen, so dass jedes Teleskoprohr unabhängig von den anderen Teleskoprohren mit einem Kühlluftstrom beaufschlagt werden kann.

Gemäß einer vorteilhaften Ausführungsform hat die Vorformstation drei am Vorformhalterarm gehalterte Vorformhälften, drei im Vorformhalterarmeinsatz ausgebildete Kühlluftdurchgänge, eine Teleskoprohranordnung mit drei Teleskoprohren, drei im Stationskasteneinsatz ausgebildete Kühlluftdurchgänge und drei jeweils einem Kühlluftdurchgang des Stationskasteneinsatzes zugeordnete stationskastenseitige Luftregelventile. Bei dieser Ausführungsform kann jede einzelne Vorformhälfte separat mit Kühlluft versorgt werden, wobei darüber hinaus der Kühlluftstrom für jede Vorformhälfte beliebig einstellbar ist. Dies ist insbesondere für die mittlere Vorformhälfte von Bedeutung, da sich für diese Vorformhälfte andere Temperaturverhältnisse ergeben als für die beiden äußeren Vorformhälften.

Durch die unterschiedlich ausgestaltbaren Vorformhalterarmeinsätze und/oder die unterschiedlich ausgestaltbaren Stationskasteneinsätze kann die Vorformstation - je nach Anforderungsprofil an den durchzuführenden Fertigungsprozess - mit einem vergleichsweise geringen technisch-konstruktiven Aufwand ausgestaltet bzw. verändert werden.

Gemäß einer weiteren vorteilhaften Ausführungsform der erfindungsgemäßen Vorformstation sind die jedem Luftregelventil zugeordneten Steuerglieder als druckluftbeaufschlagbare Kolben/Zylinderanordnungen ausgebildet. Damit Kühlluft in die Vorformhälften gelangen kann, müssen die Zylinder dieser Kolben/Zylinderanordnungen angesteuert werden. Dies geschieht über in Form von Druckluftanschlüssen vorgesehene Steuerluftanschlüsse. Sobald ein gewisser Steuerluftdruck anliegt, werden die Zylinder vorzugsweise in abwärtige Richtung gedrückt, wodurch dann Luft aus dem Stationskasten in die Kühlrohre und weiter in die Vorformhalterarme fließen kann. Soll die Kühlung beendet werden und damit keine Kühlluft mehr durch die Teleskoprohre fließen, muss die Steuerluft zu den Zylinderanordnungen ausgeschaltet werden. Eine Regelung des Volumenstroms ist durch den Druck der Steuerluft ebenfalls möglich. Bei einem vergleichsweise niedrigen Steuerdruck werden die Ventile mittels der Kolben/Zylinderanordnungen nicht soweit aufgesteuert, so dass weniger Kühlluft in die Teleskoprohre einströmen kann. Ein hoher Steuerdruck hat zur Folge, dass die Kolben/Zylinderanordnungen voll aufgefahren werden, so dass hohe Kühlluftvolumen in die Teleskoprohre eintreten können. Selbstverständlich kann diese Steuerung bzw. Regelung für jedes einzelne Teleskoprohr separat vorgenommen und eingestellt werden, wenn je Teleskoprohr eine Kolben/Zylinderanordnung bzw. ein Luftregelventil vorgesehen ist.

Gemäß einer weiteren vorteilhaften Ausführungsform der Erfindung wird eine im Vergleich zum Stand der Technik verbesserte Kühlung der Mündungsformen an der Vorformstation erreicht, indem im Vorformhalterarm ein Kühlluftkanal ausgebildet ist, der an den bzw. an die vorformhalterarmseitigen Kühlluftdurchgänge angeschlossen ist und aus dem den Mündungsformen der Vorformhälften zugeordnete Mündungskühldüsen abzweigen.

Im Folgenden wird die Erfindung anhand von Ausführungsformen unter Bezugnahme auf die Zeichnung näher erläutert.

Es zeigen:
- Figur 1: eine perspektivische Darstellung einer Ausführungsform einer erfindungsgemäßen Vorförmstation einer IS-Glasmaschine;
- Figur 2: eine Schnittdarstellung der in Figur 1 gezeigten Ausführungsform der erfindungsgemäßen VorformStation; und
- Figur 3: die Schnittansicht "A-A" aus Figur 2.

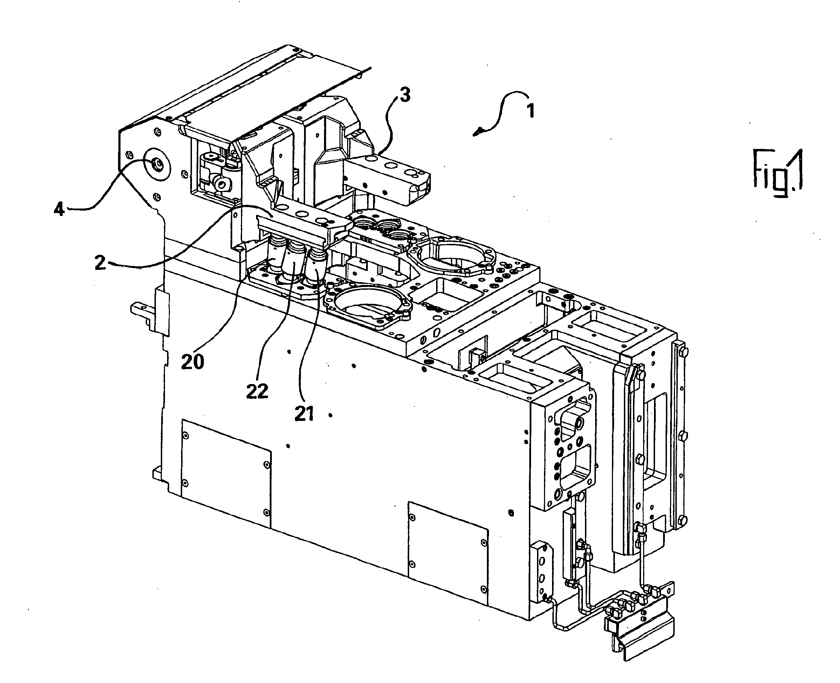

Eine in Figur 1 gezeigte Ausführungsform einer erfindungsgemäßen Vorformstation 1 einer im übrigen nicht gezeigten IS-Glasmaschine hat zwei Vorformhalterarme 2, 3, die längs einer Führwelle 4 parallel geführt aufeinander zu und voneinander weg bewegbar sind. Hierdurch werden die in den Figuren nicht gezeigten Vorformhälften, die einander zugeordnet an den Vorformhalterarmen 2 und 3 gehaltert sind, bei der Aufeinanderzubewegung der beiden Vorformhalterarme 2, 3 gleichzeitig und simultan geschlossen und bei der Voneinanderwegbewegung der beiden Vorformhalterarme 2, 3 gleichzeitig und simultan geöffnet.

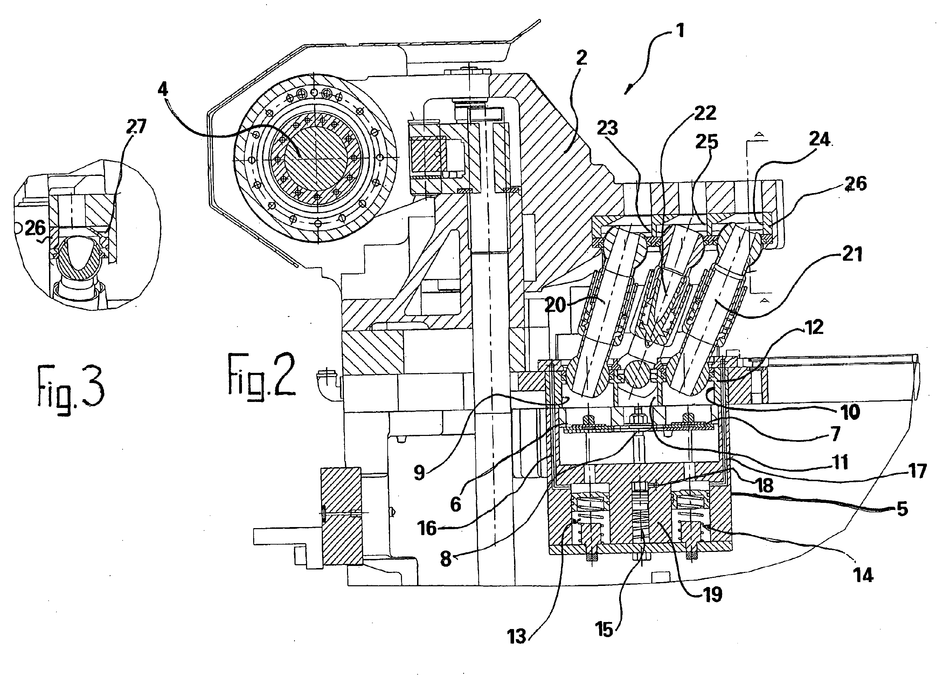

Ein Stationskasten 5 der Vorformstation 1, der an eine Kühlvorrichtung der IS-Glasmaschine angeschlossen und von dort aus mit Kühlluft versorgbar ist, ist gemäß der in Figur 2 gezeigten Ausführungsform der Vorformstation 1 mit drei als Proportionalventil ausgebildeten Luftregelventilen 6, 7, 8 ausgerüstet. Über die Luftregelventile 6, 7, 8 ist der Stationskasten 5 an drei Kühlluftdurchgänge 9, 10, 11 eines auf dem Stationskasten 5 sitzenden Stationskasteneinsatzes 12 verbunden.

Die drei Luftregelventile 6, 7, 8 sind jeweils mit einem Steuerglied 13, 14, 15 ausgebildet, wobei jedes dieser Steuerglieder 13, 14, 15 als Kolben/Zylinderanordnung ausgebildet ist, die von einer Steuerluftleitung 16, 17, 18 mit Steuerluft beaufschlagbar ist. Die als Proportionalventile ausgebildeten Luftregelventile 6, 7, 8 sind somit hinsichtlich ihres Durchflussquerschnitts stufenlos einstellbar, und zwar separat und unabhängig voneinander.

Die Steuerglieder 13, 14, 15 sind in einem Zylinderblock 19 des Stationskastens 5 angeordnet bzw. ausgebildet.

In jedem stationskasteneinsatzseitigen Kühlluftdurchgang 9, 10, 11 ist ein stationskastenseitiges Rundende eines Teleskoprohrs 20, 21, 22 bewegbar gehaltert. Jedes dieser Teleskoprohre 20, 21, 22 ist mittels eines vorformhalterseitigen Rundendes in einem Kühlluftdurchgang 23, 24, 25 ebenfalls bewegbar gehaltert, wobei die Kühlluftdurchgänge 23, 24, 25 in einem Vorformhalterarmeinsatz 26 ausgebildet sind. Über diesen Vorformhalterarmeinsatz 26 sind die in den Figuren 1 bis 3 nicht gezeigten, an den Vorformhalterarmen 2 bzw. 3 gehalterten Vorformhälften mit Kühlluft versorgbar.

Bei der in Figur 2 gezeigten Ausführungsform der Vorformstation 1 ist die Teleskoprohranordnung 20, 21, 22, die den Vorformhalterarmeinsatz 26 mit dem Stationskasteneinsatz 12 und damit den Vorformhalterarm 2 mit dem Stationskasten 5 verbindet, aus den drei Teleskoprohren 20, 21, 22 gebildet. Da jedem dieser Teleskoprohre 20, 21, 22 im Stationskasten 5 ein Luftregelventil 6, 7, 8 zugeordnet ist, kann die Kühlluftzufuhr für jede der drei am Vorformhalterarm 2 gehalterten Vorformhälften separat und unabhängig gesteuert bzw. geregelt werden. So kann beispielsweise die über das Teleskoprohr 21 mit Kühlluft versorgbare mittlere Vorformhälfte in anderer Weise mit Kühlluft beaufschlagt werden als die beiden über die Teleskoprohre 20 und 22 mit Kühlluft versorgbaren äußeren Vorformhälften.

Des Weiteren ist im Vorformhalterarm 2, wie sich am besten aus Figur 3 ergibt, ein an die Kühlluftdurchgänge 23, 24, 25 angeschlossener Kühlluftkanal 27 ausgebildet, von dem aus in den Figuren nicht dargestellte Mündungskühldüsen abzweigen, die den Mündungsformen der Vorformhälften zugeordnet und mittels denen diese Mündungsformen kühlbar sind.

Die Teleskoprohre 20, 21, 22 sind aufgrund ihrer Längenverstellbarkeit sowie ihrer als Rundenden ausgebildeten Endabschnitte und deren bewegbarer Halterung im Stationskasteneinsatz 12 bzw. im Vorformhalterarmeinsatz 26 mit dem sich in Bezug auf den Stationskasten 5 längs der Führwelle 4 der Vorformstation 1 bewegenden Vorformhalterarm 2 verstellbar. Selbstverständlich sind an dem in Figur 2 nicht gezeigten Vorformhalterarm 3 der Vorformstation 1 entsprechende Teleskoprohre in gleicher Ausgestaltung und Anordnung ausgebildet.

Durch den Austausch des am Vorformhalterarm 2 bzw. 3 vorgesehenen Vorformhalterarmeinsatzes 26 lässt sich die Vorformstation 1 in einfacher Weise an unterschiedliche Betriebsweisen anpassen.

## Patentansprüche

1. Vorformstation einer IS-Glasmaschine, mit einem Stationskasten (5), der von einer Kühlvorrichtung der IS-Glasmaschine mit Kühlluft versorgbar ist, zwei Vorformhalterarmen (2, 3), die an der Vorformstation (1) parallel geführt aufeinander zu und voneinander weg bewegbar sind, Vorformhälften, die paarweise einander zugeordnet an den Vorformhalterarmen (2, 3) gehaltert und die mittels der Aufeinanderzu- bzw. Voneinanderwegbewegung der parallel geführten Vorformhalterarme (2, 3) simultan in ihre Schließ- bzw. in ihre Öffnungsstellung bewegbar sind, wobei jeder Vorformhalterarm (2, 3) mittels einer beweglichen Teleskoprohranordnung (20, 21, 22), die einerseits am Vorformhalterarm (2, 3) angelenkt ist, an den Stationskasten (5) der Vorformstation (1) und damit an die Kühlvorrichtung der IS-Glasmaschine angeschlossen ist, so dass jeder Vorformhalterarm (2, 3) sowohl während der parallel geführten Aufeinanderzubewegung als auch während der parallel geführten Voneinanderwegbewegung als auch in Schließstellung als auch in Öffnungsstellung mit Kühlluft versorgbar ist, **dadurch gekennzeichnet, dass** zu jeder Teleskoprohranordnung (20, 21, 22) eine der Anzahl der vom Vorformhalterarm (2, 3) gehalterten Vorformhälften entsprechende Anzahl Teleskoprohre (20, 21, 22) gehören, die andererseits am Stationskasten (5) der Vorformstation angelenkt sind, und von denen jeweils ein Teleskoprohr (20, 21, 22) jeweils einer Vorformhälfte zugeordnet ist, und dass jedem Teleskoprohr (20, 21, 22) der Teleskoprohranordnung (20, 21, 22) stationskästenseitig ein Luftregelventil (6, 7, 8) zugeordnet ist, das mittels eines Steuerglieds (13, 14, 15) separat regelbar ist.

2. Vorformstation nach Anspruch 1, bei der jedes Luftregelventil (6, 7, 8) als Proportionalventil ausgebildet ist.

3. Vorformstation nach Anspruch 1 oder 2, bei der die Teleskoprohranordnung (20, 21, 22) über einen vom Stationskasten (5) separaten Stationskasteneinsatz an den Stationskasten (5) angeschlossen ist.

4. Vorformstation nach einem der Ansprüche 1 bis 3, bei der die Teleskoprohranordnung (20, 21, 22) über einen vom Vorformhalterarm (2, 3) separaten Vorformhalterarmeinsatz (26) an den Vorformhalterarm (2, 3) angeschlossen ist.

5. Vorformstation nach Anspruch 4, bei der der Vorformhalterarmeinsatz (26) eine der Anzahl der vom Vorformhalterarm (2, 3) gehalterten Vorformhälften entsprechende Anzahl Kühlluftdurchgänge (23, 24, 25) aufweist.

6. Vorformstation nach einem der Ansprüche 3 bis 5, bei der der Stationskasteneinsatz (12) eine der Anzahl der Teleskoprohre (20, 21, 22) der Teleskoprohranordnung (20, 21, 22) entsprechende Anzahl Kühlluftdurchgänge (9, 10, 11) aufweist.

7. Vorformstation nach einem der Ansprüche 1 bis 6, mit drei am Vorformhalterarm (2, 3) gehalterten Vorformhälften, drei im Vorformhalterarmeinsatz (26) ausgebildeten Kühlluftdurchgängen (23, 24, 25), einer Teleskoprohranordnung (20, 21, 22) mit drei Teleskoprohren (20, 21, 22), drei im Stationskasteneinsatz (12) ausgebildeten Kühlluftdurchgängen (9, 10, 11) und drei jeweils einem Kühlluftdurchgang (9, 10, 11) des Stationskasteneinsatzes (12) zugeordneten stationskastenseitigen Luftregelventilen (6, 7, 8).

8. Vorformstation nach einem der Ansprüche 1 bis 7, bei der jedes einem Luftregelventil (6, 7, 8) zugeordnete Steuerglied (13, 14, 15) als druckluftbeaufschlagbare Kolben/Zylinderanordnung ausgebildet ist.

9. Vorformstation nach einem der Ansprüche 1 bis 8, bei der im Vorformhalterarm (2, 3) ein Kühlluftkanal (27) ausgebildet ist, der an den bzw. an die Vorformhalterarmseitigen Kühlluftdurchgänge (23, 24, 25) angeschlossen ist und aus dem Mündungsformen der Vorformhälften zugeordnete Mündungskühldüsen abzweigen.

## Claims

1. A blank moulding station of an IS glass machine, having a station box (5) that can be supplied with cooling air from a cooling device of the IS glass machine, two blank mould holder arms (2, 3) mounted on the blank moulding station (1) so as to be movable toward and away from one other, blank mould halves that are assigned to one another in pairs and mounted on the blank mould holder arms (2, 3), and which are movable simultaneously in an opening and closing movement by means of the parallel movement of the blank mould holder arms (2, 3), wherein each blank mould holder arm (2, 3) is connected to the station box (5) of the blank moulding station (1) and thus also to the cooling device of the IS glass machine via a movable telescopic tube assembly (20, 21, 22), one end of which is attached in hinged manner to the mould holder arm (2, 3), in such manner that each mould holder arm (2, 3) can be supplied with cooling air not only while the arms are moving under parallel guidance toward one another, but also while they are moving under parallel guidance away from one another as well as in the closed and open position, **characterized in that** a number of telescopic tubes (20, 21, 22) equal to the number of blank mould halves mounted on the mould holder arms (2, 3) is included in each telescopic tube assembly (20, 21, 22), the other ends of which are attached in hinged manner to the station box (5) of the blank moulding station, and by which one telescopic tube (20, 21, 22) is assigned to each blank mould half, and **in that** an air control valve (6, 7, 8) is assigned to the station box side of each telescopic tube (20, 21, 22) of the telescopic tube assembly (20, 21, 22), which valve is controllable separately via a control member (13, 14, 15).

2. The lank moulding station according to claim 1, wherein each air control valve (6, 7, 8) has the form of a proportional valve.

3. The blank moulding station according to any one of claims 1 or 2, wherein the telescopic tube assembly (20, 21, 22) is connected to the station box (5) via a station box insert that is separate from the station box (5).

4. The blank moulding station according to any one of claims 1 to 3, wherein the telescopic tube assembly (20, 21, 22) is connected to the blank mould holder arm (2, 3) via a blank mould holder arm insert (26) that is separate from the blank mould holder arm (2, 3).

5. The blank moulding station according to claim 4, wherein the blank mould holder arm insert (26) has a number of cooling air passthroughs (23, 24, 25) equal to the number of blank mould halves mounted on the blank mould holder arm (2, 3).

6. The blank moulding station according to any one of claims 3 to 5, wherein the station box insert (12) has a number of cooling air passthroughs (9, 10, 11) equal to the number of telescopic tubes (20, 21, 22) of the telescopic tube assembly (20, 21, 22).

7. The blank moulding station according to any one of claims 1 to 6, with blank mould halves mounted on the blank mould holder arm (2, 3), three cooling air passthroughs (23, 24, 25) created in the blank mould holder arm insert (26), one telescopic tube arrangement (20, 21, 22) having three telescopic tubes (20, 21, 22), three cooling air passthroughs (9, 10, 11) created in the station box insert (12) and three air control valves (6, 7, 8) on the station box side, each valve being assigned to one cooling air passthrough (9, 10, 11) of the station box insert (12).

8. The blank moulding station according to any one of claims 1 to 7, wherein each control member (13, 14, 15) assigned to an air control valve (6, 7, 8) is constructed as a piston/cylinder arrangement that can be driven by compressed air.

9. The blank moulding station according to any one of claims 1 to 8, wherein a cooling air channel (27) is formed in the blank mould holder arm (2, 3), said channel communicating with the one or more air passthrough(s) (23, 24, 25) on the blank mould holder arm side, and from which channel the cooling nozzle orifices assigned to the finish shapes of the blank mould halves branch off.

## Revendications

1. Poste de préformage d'une machine de formage d'objets en verre, comportant un caisson de poste (5), qui peut être alimenté par un dispositif de refroidissement de la machine de formage d'objets en verre avec de l'air de refroidissement, deux bras de retenue de prémoule (2, 3), deux bras de retenue de prémoule (2, 3), qui peuvent être rapprochés l'un de l'autre et éloignés l'un de l'autre en guidage parallèle sur le poste de prémoule (1), des moitiés de prémoule, qui sont maintenues par paire en étant coordonnées aux bras de retenue de prémoule (2, 3) et qui, au moyen du mouvement de rapprochement l'un vers l'autre respectivement d'éloignement l'un de l'autre des bras de retenue de prémoule (2, 3) guidés parallèlement peuvent être déplacés simultanément dans leur position de fermeture, respectivement dans leur position d'ouverture, dans lequel chaque bras de retenue de prémoule (2, 3) est raccordé au moyen d'un agencement de bras télescopique mobile (20, 21, 22), qui est raccordé par charnière d'un côté au bras de retenue de prémoule (2, 3), au caisson de poste (5) du poste de prémoulage (1) et donc au dispositif de refroidissement de la machine de formage d'objets en verre, de telle sorte que chaque bras de retenue de prémoule (2, 3) peut être alimenté en air de refroidissement tant pendant le mouvement de rapprochement l'un de l'autre guidé parallèlement que pendant le mouvement d'éloignement l'un de l'autre guidé parallèlement, tant dans la position de fermeture que dans la position d'ouverture, **caractérisé en ce que** à chaque agencement de tube télescopique (20, 21, 22) appartient une pluralité de tubes télescopiques (20, 21, 22) correspondant à la pluralité de moitiés de prémoules maintenus par le bras de retenue de prémoule (2, 3), qui sont raccordés par charnière d'un côté au caisson de poste (5) du poste de prémoulage, et desquels respectivement un tube télescopique (20, 21, 22) est coordonné à une moitié de prémoule respective, et **en ce que** à chaque tube télescopique (20, 21, 22) de l'agencement de tube télescopique (20, 21, 22) est coordonnée une soupape de régulation d'air (6, 7, 8) du côté du caisson de poste, qui peut être régulée séparément au moyen d'un organe de commande (13, 14, 15).

2. Poste de prémoulage selon la revendication 1, dans lequel chaque soupape de régulation d'air (6, 7, 8) est conçue comme une soupape proportionnelle.

3. Poste de prémoulage selon la revendication 1 ou 2, dans lequel l'agencement de tube télescopique (20, 21, 22) est raccordé au caisson de poste (5) par l'intermédiaire d'une garniture de caisson de poste séparée du caisson de poste (5).

4. Poste de prémoulage selon une des revendications 1 à 3, dans lequel dans lequel l'agencement de tube télescopique (20, 21, 22) est raccordé au bras de retenue de prémoule (2, 3) par l'intermédiaire d'une garniture de bras retenue de prémoule (26) séparée du bras de retenue de prémoule (2, 3).

5. Poste de prémoulage selon la revendication 4, dans lequel la garniture de bras de retenue de prémoule (26) présente une pluralité de passages d'air de refroidissement (23, 24, 25) correspondant à la pluralité de moitiés de prémoule retenues par le bras de retenue de prémoule (2, 3).

6. Poste de prémoulage selon une des revendications 3 à 5, **caractérisé en ce que** la garniture de caisson de poste (12) présente une pluralité de passages d'air de refroidissement (9, 10, 11) correspondant à la pluralité de tubes télescopiques (20, 21, 22) de l'agencement de tube télescopique (20, 21, 22).

7. Poste de prémoulage selon une des revendications 1 à 6, comportant trois moitiés de prémoule retenues sur le bras de retenue de prémoule (2, 3), trois passages d'air de refroidissement (23, 24, 25) réalisés dans la garniture de retenue de prémoule (26), un agencement de tube télescopique (20, 21, 22) comportant trois tubes télescopiques (20, 21, 22), trois passages d'air de refroidissement (9, 10, 11) réalisés dans la garniture de caisson de poste (12) et trois soupapes de régulation d'air (6, 7, 8) du côté du caisson de poste coordonnée respectivement à un passage d'air de refroidissement (9, 10, 11) de la garniture de caisson de poste (12).

8. Poste de prémoulage selon une des revendications 1 à 7, dans lequel chaque organe de commande (13, 14, 15) coordonné à une soupape de régulation d'air (6, 7, 8) est réalisé comme un agencement cylindre/piston pouvant être sollicité par de l'air pressurisé.

9. Poste de prémoulage selon une des revendications 1 à 8, dans lequel dans le bras de retenue de prémoule (2, 3) un canal d'air de refroidissement (27) est réalisé, qui est raccordé au, respectivement aux passages d'air de refroidissement (23, 24, 25) du côté du bras de retenue de prémoule et hors duquel bifurquent des buses de refroidissement de bague coordonnées aux moules de bague des moitiés de prémoule.
